# EUROPÄISCHE PATENTSCHRIFT

(11) **EP 1 627 788 B1**
(45) Veröffentlichungstag und Bekanntmachung des Hinweises auf die Patenterteilung: **05.03.2008**
(21) Anmeldenummer: 05017278.2
(22) Anmeldetag: 09.08.2005
(51) Int. Cl.: B60S 3/00

(54) **Trocknungsverfahren und Trockeneinrichtung für Behandlungseinrichtungen von Fahrzeugen**
Drying method and drying apparatus for vehicle treating devices
Procédé et dispositif de séchage pour systèmes de traitement de vehicules

(30) Priorität: 18.08.2004 DE 202004012921 U
(43) Veröffentlichungstag der Anmeldung: 22.02.2006
(73) Patentinhaber: Otto Christ AG, 87734 Benningen (DE)
(72) Erfinder: Christ, Markus, 87700 Memmingen (DE)
(74) Vertreter: Ernicke, Hans-Dieter

(56) Entgegenhaltungen:
- EP-A- 0 965 505
- US-A- 3 705 435
- US-A- 5 875 565

## Beschreibung

Die Erfindung betrifft ein Trocknungsverfahren und eine Trockeneinrichtung für Behandlungseinrichtungen von Fahrzeugen, insbesondere Autowaschanlagen, mit den Merkmalen im Oberbegriff des Hauptanspruchs.

Bei Autowaschanlagen ist es aus der Praxis bekannt, für die Fahrzeugtrocknung eine Trockeneinrichtung mit einer Dachdüse und ggf. mehreren Seitendüsen nebst Gebläsen vorzusehen. Diese horizontal bzw. im wesentlichen vertikal ausgerichteten Trockendüsen sind üblicherweise einteilig ausgebildet und besitzen jeweils einen Düsenkasten mit einem Gebläse. Bei Dachdüsen kommt es bisweilen vor, dass an einem Düsenkasten zwei Gebläse angeordnet sind. Trotz aller Anstrengungen der Fachwelt bieten die bekannten Trockeneinrichtungen noch kein optimales Trockenergebnis für das Fahrzeug.

Die US-A-5,875,565 zeigt eine Trockeneinrichtung für Autowaschanlagen mit mehreren rund um das Fahrzeug verteilt angeordneten einzelnen Trockendüsen, die jeweils aus einem einzelnen Gebläse und einem angebauten Düsenschacht bestehen. Die Trockendüsen sind getrennt und mit Abstand voneinander angeordnet, wobei ihre Düsenschächte aus unterschiedlichen Richtungen schräg auf das Fahrzeug gerichtet sind. Den Gebläsen wird die Trockenluft aus einem gebäudeseitig vorgesehenen zentralen Versorgungsschacht mit Abzweigschächten zugeführt.

Die US-A-3,705,435 offenbart eine Autowaschanlage mit einer Trockendüse, die aus zwei Gebläsen mit angebauten Düsenschächten besteht, wobei die Düsenschächte nebeneinander beidseits der Fahrzeugmitte angeordnet sind und in der Mitte zusammentreffen. Das Gebläse und die zugehörige Düsenauslassöffnung befinden sich dabei jeweils auf der gleichen Seite des Fahrzeugs.

Aus der EP 0 965 505 A2 ist eine Autowaschanlage mit einer ähnlichen Trockendüse wie beim vorgenannten Stand der Technik bekannt.

Es ist Aufgabe der vorliegenden Erfindung, eine verbesserte Trockentechnik aufzuzeigen.

Die Erfindung löst diese Aufgabe mit den Merkmalen im Oberbegriff des Verfahrens- und Vorrichtungshauptanspruchs.
Die mehrteilige Ausbildung der Trockendüse mit sich kreuzenden Düsenkästen verbessert die Trocknungswirkung am Fahrzeug. Hierdurch und über die vergrößerte Düsenkastenlänge lassen sich die Trockenluftströme besser führen und ausrichten.

Aus den verschiedenen Düsenkästen können Trockenluftströme mit unterschiedlichen Austrittsrichtungen auf das Fahrzeug gelenkt werden. Bei einer Dachdüse hat dies den Vorteil, dass das Wasser auf den oberen oder horizontalen Fahrzeugflächen, wie Motorhaube, Dach, Kofferraumdeckel, Front- und Heckscheibe etc. mit schräg auftreffenden Luftstrahlen von der Mitte aus nach links und rechts abgeschoben werden kann. Das Wasser wird insgesamt besser und rückstandsfrei entfernt. Wasserschleppen werden weitgehend vermieden. Hierbei ist es insbesondere günstig, dass durch die Düsengestaltung der austretende Trockenluftstrom schräg zur Fahrzeuglängsachse oder Fahrtrichtung ausgerichtet werden kann, so dass durch diese Schräglage eine weitere, das Wasser noch besser abtreibende Richtungskomponente hinzukommt.

Die beanspruchte Trockeneinrichtung baut trotz kreuzender Düsenkästen sehr schmal und leicht. Sie lässt sich auch unter beengten Platzverhältnissen in einem Waschportal unterbringen. Trotz mehrerer Düsenkästen ist die Trockendüse nicht wesentlich breiter als ein einzelner Düsenkasten mit Gebläse. Hierfür ist die abgewinkelte und mehrachsig verjüngte Düsenkastenform sowie die gegenseitig angeschmiegte Anordnung der Düsenkästen von Vorteil.

Mit der beanspruchten Gestaltung lässt sich zudem eine maximale Länge der Luftaustrittsöffnung unter Aufrechterhaltung optimaler Strömungsbedingungen der Trockenluft erreichen, wobei die Öffnungslänge größer als bei konventionellen Trockendüsen ist. Die lange Luftaustrittsöffnung wird durch das Zusammenwirken der einzelnen Düsenschlitze geschaffen. Die vorderen Enden der Düsenkästen können unter das etwas höher angesetzte Gebläse des anderen Düsenkastens reichen und so die Länge der Düsenschlitze maximieren. Günstig ist außerdem der Überlappungsbereich der Düsenschlitze, der bei einer Dachdüse z.B. in der Anlagenmitte und üblicherweise auch in der Fahrzeugmitte angeordnet ist. Dieser Überlappungsbereich wirkt sich besonders günstig auf das Abtreiben des wassers aus.

Die gekreuzten Düsenkästen und die weit auseinander liegende Anordnung von Gebläse und Düsenschlitz bietet zudem den Vorteil einer besseren Strömungsführung der Trockenluft in den Düsenkästen und den dort gebildeten langen Strömungskanälen. Die Trocknungsluft lässt sich besser und sicherer in ihrer Strömungsrichtung innerhalb des Strömungskanals und beim Austritt aus dem Düsenschlitz am Kanalende lenken. Strömungsverluste werden weitgehend vermieden. Die Gebläseleistung kann besser ausgenutzt werden. Im Vergleich mit konventionellen Trockeneinrichtungen können kleinere und leisere Gebläse eingesetzt werden.

Günstig ist ferner der Einsatz von schmal bauenden Radialgebläsen an den Düsenkästen, wobei diese Gebläseart besonders gute Strömungsergebnisse bietet, insbesondere in Verbindung mit einem Spiralbereich des Düsenkastens am Gebläseumfang.

Die beanspruchte Trockendüse eignet sich besonders für den Einsatz als im wesentlichen horizontale Dachdüse. Die günstigen Eigenschaften werden zusätzlich durch eine nach der Fahrzeughöhenkontur gesteuerte Hebe- und Senkbewegung der Dachdüse mittels einer Hubführung in einem Portal oder einem Ständer unterstützt. Die Dachdüse lässt sich sowohl in Portalwaschanlagen, wie auch in Trockenstationen von Autowaschstraßen, Taktanlagen oder dergleichen einsetzen. Die Trockendüse eignet sich ansonsten auch für beliebige andere Einsatzbereiche, insbesondere bei entsprechender Anpassung auch als Seitendüse.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Stirnansicht eines Portals einer Autowaschanlage mit einer Trockeneinrichtung und einer mehrteiligen Trockendüse,
- Figur 2:: eine perspektivische Ansicht der Trockendüse von Figur 1,
- Figur 3:: eine vereinfachte Frontansicht der Trockendüse mit Darstellung der Luftströme,
- Figur 4:: eine detailliertere Frontansicht der Trockendüsen,
- Figur 5:: eine geklappte Unteransicht der Trockendüse von Figur 4 gemäß Pfeil v,
- Figur 6:: eine geklappte Draufsicht der Trockendüse von Figur 4 gemäß Pfeil VI,
- Figur 7:: eine einzelne Düseneinheit in Frontansicht,
- Figur 8:: eine Trockendüse mit etwas anderer Kastenform in perspektivischer Ansicht und
- Figur 9:: eine Variante der Trockendüse in Frontansicht.

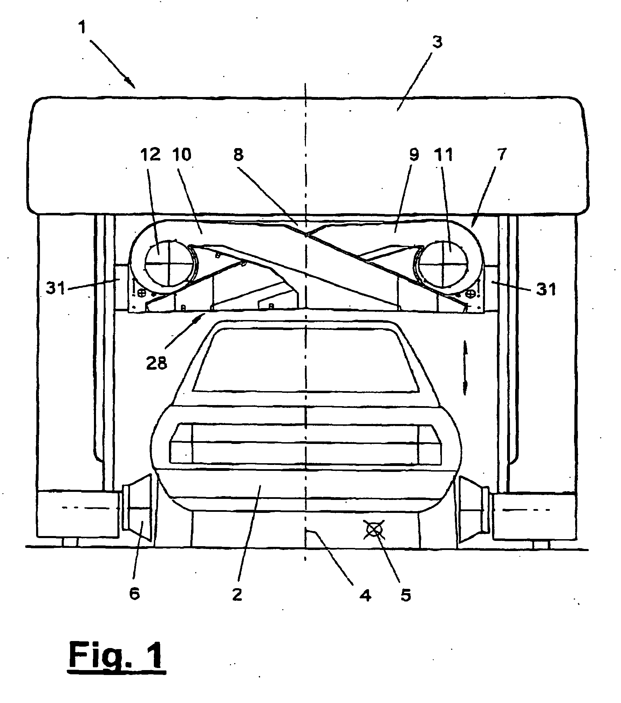

Figur 1 zeigt in einer Front- oder Stirnansicht und in schematischer Darstellung eine Behandlungseinrichtung (1) für Fahrzeuge (2), die in diesem Fall als Autowaschanlage, insbesondere als Portalwaschanlage, ausgebildet ist. Alternativ kann es sich um eine Autowaschstraße, eine Taktanlage oder eine andere beliebige Ausführungsform einer Autowaschanlage handeln. In weiterer Abwandlung kann die Behandlungseinrichtung (1) auch als Polieranlage oder dergleichen ausgebildet sein.

Die gezeigte Portalwaschanlage (1) besitzt mindestens ein gegenüber dem stehenden Fahrzeug (2) in Fahrtrichtung (5) verfahrbares Portal (3), in dem verschiedene Behandlungsaggregate angeordnet sind. Dies ist zum einen eine beliebig ausgebildete Wascheinrichtung (6), von der der Übersicht halber nur Radwaschbürsten dargestellt sind. Ferner können Dach- und Seitenbürsten, Hochdruck-Wascheinrichtungen oder sonstige Waschaggregate vorhanden sein. Hinzu kommen Auftragsvorrichtungen für Wasser, Reinigungsmittel, Trocknungsmittel, Konservierungsmittel und dergleichen.

Die Behandlungseinrichtung (1) besitzt ferner eine Trockeneinrichtung (7), die mindestens eine Trockendüse (8) aufweist. In der gezeigten Ausführungsform ist dies eine im wesentlichen horizontal ausgerichtete Dachdüse, die mittels einer angetriebenen und steuer- oder regelbaren Hubführung (31) an den Portalständern gegenüber dem Fahrzeug (2) auf- und abbewegt werden kann und dadurch in Verfolgung der Höhenkontur des Fahrzeugs auf einen optimalen Abstand gegenüber der beaufschlagten Fahrzeugoberfläche eingestellt werden kann. Die Dachdüse (8) kann außerdem kann außerdem an der Hubführung (31) um ihre Längsachse schwenkbar angeordnet sein. Auf die Hubführung (31) und die Schwenkanordnung kann alternativ verzichtet werden.

Die Trockendüse (8) ist mehrteilig ausgebildet und besitzt mindestens zwei Düseneinheiten (9,10). Es können auch mehr Düseneinheiten vorhanden sein. Die Düseneinheiten (9,10) bestehen jeweils aus einem Düsenkasten (13,14) und mindestens einem zugehörigen Gebläse (11,12). Die Düsenkästen (13,14) leiten die Trockenluft vom Gebläse (11,12) durch einen innen liegenden Strömungskanal (17,18) zu einer am Kanalende angeordneten und vorzugsweise schlitzförmigen Austrittsöffnung, die nachfolgend als Düsenschlitz (19,20) bezeichnet wird.

Die Düsenkästen (13,14) sind strömungstechnisch getrennt und gegeneinander abgeschottet, so dass kein gegenseitiger Luftübertritt erfolgt. Die abgewinkelten Düsenkästen (13,14) kreuzen einander und sind quer zur Längsachse (30) der Trockendüse (8) bzw. in Fahrtrichtung oder Querrichtung (5) hintereinander angeordnet. Die Düsenkästen (13,14) sind hierbei vorzugsweise eng aneinander gebaut und sind mit ihren Gebläsen (11,12) miteinander zu einer Baueinheit der Trockendüse (8) verbunden.

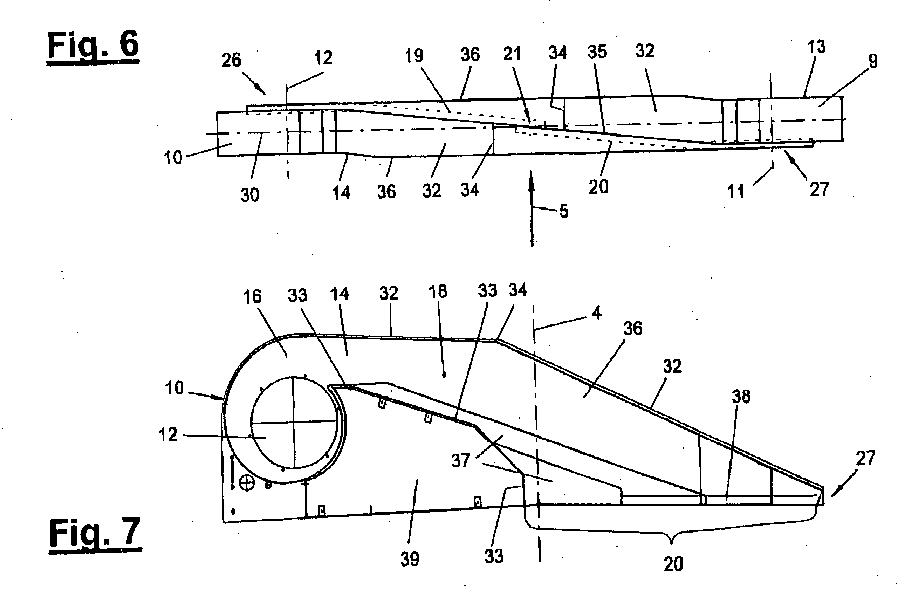

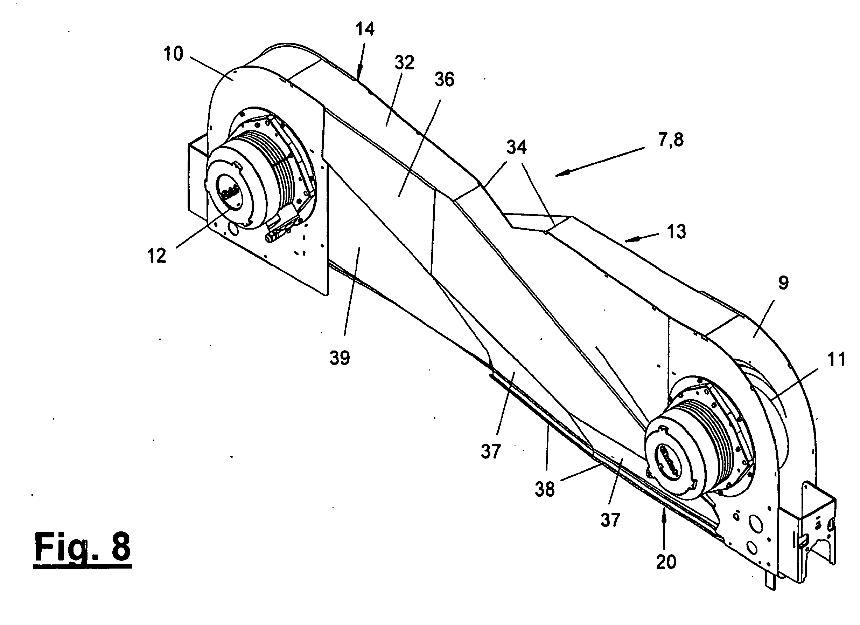

Die.einander kreuzenden Düsenkästen (13,14) reichen vorzugsweise über die gesamte Breite der Trockendüse (8). Sie haben dadurch einen langen Strömungskanal (17,18), der ausgehend von den jeweils außenseitig angeordneten Gebläsen (11,12) über die Mitte (4) der Trockendüse (8) hinweg reicht und endseitig im nach unten offenen Düsenschlitz (19,20) mündet. Die Mitte (4) der Trockendüse (8) kann zugleich die Mitte des Portals (3) bzw. des Fahrzeugs (2) sein. Die Düsenschlitze (19,20) sind mit erheblicher Distanz zu ihrem zugehörigen Gebläse (11,12) angeordnet und liegen ihrem Gebläse (11,12) jenseits der Mitte (4) gegenüber. Figur 7 zeigt dies an einer einzelnen Düseneinheit (10) und Figur 8 an einer kompletten Trockendüse (8). Durch diese Gestaltung wird die Trockenluft jeweils am Rand der Trockendüse (8) angesaugt und im geschlossenen Strömungskanal (17,18) über die Mitte (4) bzw. die eine Fahrzeughälfte hinweg bis zum Düsenschlitz (19,20) auf der anderen Seite geblasen und dort auf das Fahrzeug (2) gerichtet.

Die Düsenschlitze (19,20) haben eine begrenzte Länge und bilden um die Mitte (4) herum in enger seitlicher Nachbarschaft eine Überlappung (21). Die Düsenschlitze (19,20) reichen dabei mit ihrem rückwärtigen Ende ein kleines Stück über die Mitte (4) hinaus. Insgesamt haben die Düsenschlitze (19,20) jeweils eine Länge von etwa der Hälfte oder etwas mehr der Trockendüsenbreite.

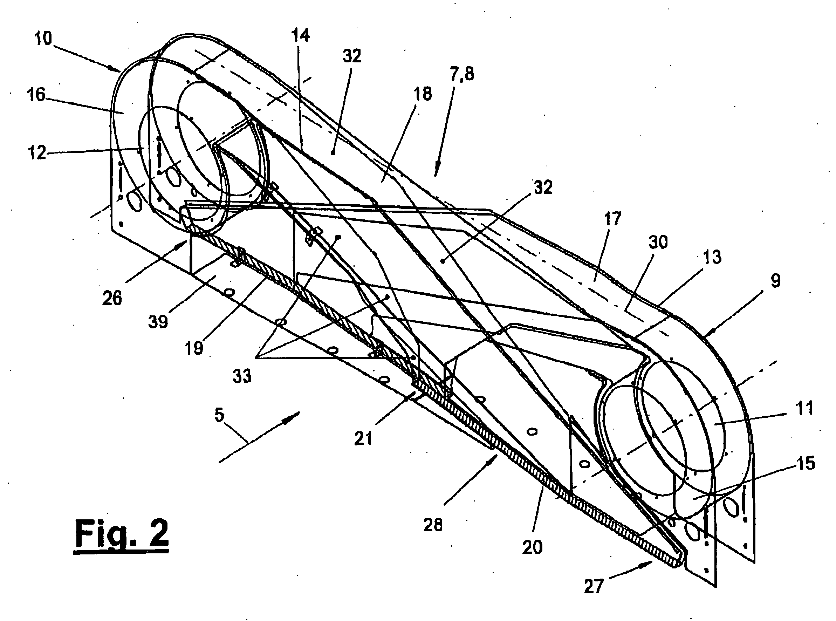

Figur 2 verdeutlicht diese Anordnung mit der perspektivischen Darstellung eines durchsichtigen Drahtlinienmodells. Die Düsenschlitze (19,20) sind hierbei durch Schraffuren kenntlich gemacht. In Figur 8 ist eine ähnliche Anordnung mit schattierter Flächendarstellung zu sehen.

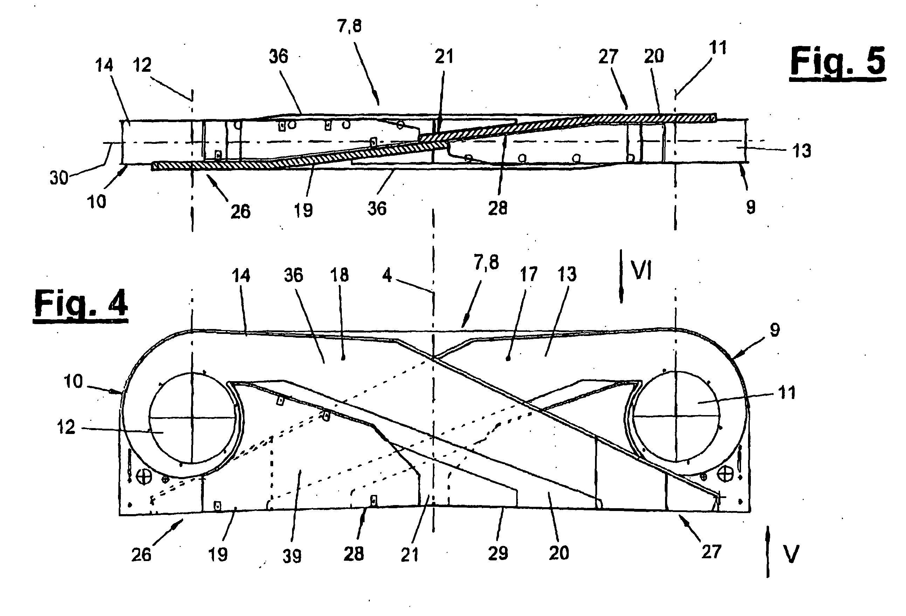

Die Düsenschlitze (19,20) haben vorzugsweise eine im wesentlichen konstante Breite. Hierbei besitzen sie allerdings einen abgewinkelten Längsverlauf, der aus Figur 2, 5 und 6 ersichtlich ist. Hierbei haben die Düsenschlitze (19,20) im Bereich um die Mitte (4) herum und etwa bis zu der Vorderkante der Gebläse (11,12) eine schräg zur Fahrt- oder Querrichtung (5) ausgerichtete Lage. Die Düsenschlitze (19,20) verlaufen hierbei parallel und entlang einer nachfolgend erläuterten Mittelwand (34). Figur 5 zeigt mit den beiden ebenfalls schraffiert dargestellten Düsenschlitzen (19,20) auch den Überlappungsbereich (21) mit enger Nachbarschaft der Düsenschlitze (19,20).

Im Bereich ihrer vorderen Enden (26,27) sind die Düsenschlitze (19,20) nach einer Knickstelle wieder längs der Achse (30) der Trockendüse (8) ausgerichtet und liegen hierbei in Parallellage auf gegenüber liegenden Seiten der Trockendüse (8). Die Düsenschlitze (19,20) bilden gemeinsam eine Luftauslassöffnung (28), die fast über die gesamte Breite der Trockendüse (8) reicht. Die Luftauslassöffnung (28) besitzt zwei Knickstellen und zeigt in der Unteransicht einen schrägen S-förmigen Verlaufen mit der besagten Überlappungsstelle (21) an der Mitte (4).

Wie Figur 2 und 8 in perspektivischen Darstellungen und Figur 6 in der Draufsicht verdeutlichen, sind die Düsenkästen (13,14) im wesentlichen gleich ausgebildet und gegenläufig angeordnet. Sie haben eine mehrachsig sich verjüngende strömungsgünstige Form, die auch der Baugröße zu Gute kommt. Durch die Gegenläufigkeit und die Verjüngungen schmiegen sie sich in Querrichtung (5) eng aneinander an. Hierbei können sie zumindest bereichsweise eine gemeinsame schräg zur Längsachse (30) und parallel zu den Düsenschlitzen (19,20) verlaufende Innenwand (35) haben oder mit eigenen Innewänden in diesem Bereich plan aneinander liegen. Die Düsenkästen (13,14) können ggf. mit ihrem vorderen Ende (26,27) bis unter und/oder neben das Gebläse (12,11) des jeweils anderen Düsenkastens (14,13) reichen. Die Gebläse (11,12) und die sie umgebenden Düsenkastenbereiche sind dazu entsprechend angehoben.

Die Gebläse (11,12) sind vorzugsweise als Radialgebläse ausgebildet, welche die Umgebungsluft axial ansaugen und an ihrem Umfang radial ausblasen. In den Zeichnungen sind die Gebläse (11,12) der Einfachheit halber nur als Kreise dargestellt, wobei ihre konstruktiven Details nicht gezeigt sind. Lediglich die Gebläsedrehachsen sind mit strichpunktierten Linien angedeutet. Umfangsseitig sind die Gebläse (11,12) jeweils von einem sich nach außen und oben erweiternden Spiralbereich (15,16) bzw. Spiralblech des Düsenkastens (13,14) umgeben.

Figur 1 bis 8 zeigen eine erste Variante in der Formgebung der Düsenkästen (13,14). Von der Stelle oberhalb der Gebläse (11,12) und der Mündung des Spiralbereichs (15,16) aus erstrecken sich die Düsenkästen (13,14) mit ihrer Oberseite bzw. ihrem oberen Leitblech (32) zunächst im wesentlichen horizontal oder mit leichter Schräglage bis in die Nähe der Mitte (4) hin und sind dort an einer Knickstelle (34) stärker nach unten abgewinkelt. Das obere Leitblech (32) erstreckt sich von der Knickstelle (34) aus im wesentlichen gerade bis zum vorderen Ende (26,27) des Düsenschlitzes (19,20). Die Kastenunterseite und das untere, ebenfalls an der Mündung des Spiralbereichs (15,16) anschließende Leitblech (33) sind stärker abwärts geneigt, wodurch der Strömungskanal (17,18) eine abfallende und zugleich in der Höhe sich diffusorartig bis zum Düsenschlitz (19,20) erweiternde Form erhält. Das untere Leitblech (33) erstreckt sich ebenfalls bis etwa in Höhe der vorgenannten Knickstelle (34), ist ab dort stärker abwärts geneigt und geht dann in einen vertikalen Wandabschnitt über, der vor der Mitte (4) liegt und das rückwärtige Ende des Düsenschlitzes (19,20) markiert.

Wie Figur 2 in Verbindung mit Figur 6, 7 und 8 verdeutlicht, haben in der Draufsicht die Düsengehäuse (13,14) vom Gebläse (11,12) ausgehend über die Länge bis zum vorderen Ende (26,27) eine insgesamt abnehmende Kastenbreite und eine sich seitlich verjüngende, spitz zulaufende Form. Die oberen Leitbleche (32) behalten dabei zunächst ihre Ausgangsbreite und knicken am Beginn der schrägen Innenwand (35) sogar leicht nach außen ab. Die Außenkante der Leitbleche (32) verläuft danach parallel zur Längsachse (30) weiter bis zum vorderen Ende (26,27), wobei sich im Zusammenwirken mit der schrägen Mittelwand (35) die Verjüngung ergibt. Die Innenwand (35) verläuft dabei im Bereich des vorderen Endes (26,27) nach der Knickstelle im Düsenschlitz (19,20) ebenfalls parallel zur Längsachse (30). Die unteren Leitbleche (33) haben eine ähnliche Formgebung in ihrer Breitenform.

Zugleich haben die Düsenkästen (13,14) an ihren äußeren Seitenwänden (36) an mehreren Stellen und insbesondere im unteren Bereich nahe den Düsenschlilzen.(19,20) seitliche Abkantungen (37), die eine Verjüngung und trichterförmige Verengung des Strömungskanals (17,18) nach unten zu den Düsenschlitzen (19,20) hin bewirken. An den Düsenschlitzen (19,20) selbst kann eine weitere Abkantung (38) mit einer im wesentlichen senkrechten Ausrichtung vorhanden sein, mit der ein vertikaler Ausblasschacht gebildet wird. Unter den Düsenkästen (13,14) kann im Bereich zwischen den Gebläsen (11, 12) und den unteren Leitblechen (33) ein Blende (39) zur Abdeckung des dortigen Hohlraums angeordnet sein. Die Abkantungen (37,38) und die Blende (39) sind in Figur 2, 7 und 8 in verschiedenen Ausführungen dargestellt.

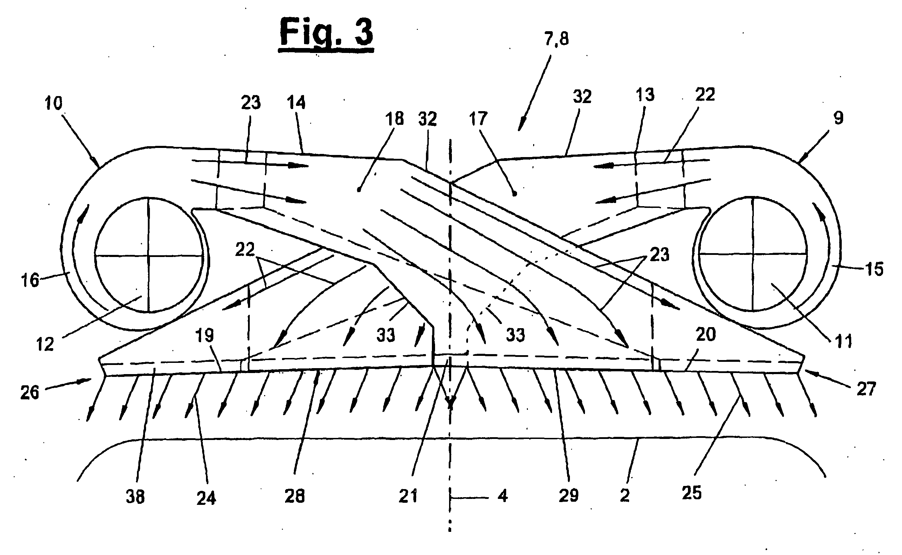

Figur 3 verdeutlicht auch die Luftströmungen (22,23) in den Düsenkästen (13,14) bzw. deren Strömungskanälen (17,18). Der verborgene Verlauf des in der Ansicht hinten liegenden Düsenkastens (13) ist gestrichelt dargestellt. Aus der Zeichnung ist auch ersichtlich, dass sich die Düsenkästen (13,14) und die Strömungskanäle (17,18) von der Ausblasstelle in Gebläsenähe in der Höhe zu den Düsenschlitzen (19,20) hin zunehmend vergrößern, wobei sie der Weite abnehmen. Durch die Verkleinerung der Kasten- bzw. Kanalbreite entsteht ein Düseneffekt. Die Trockenluft wird an den oberen Leitblechen (32) mit ruhiger Strömung und hoher Geschwindigkeit entlang geführt und erreicht auch die relativ weit von den Gebläsen (11,12) entfernten vorderen Enden (26,27) mit hoher Strömungsgeschwindigkeit. An den Düsenschlitzen (19,20) entsteht eine über den Düsenquerschnitt weitgehend gleichmäßig austretende Trockenluftströmung.

Durch die schräge Ausrichtung der Strömungskanäle (17,18) tritt die Trockenluft aus den Düsenschlitzen (19,20) ebenfalls mit schräger Richtung aus, was durch die Pfeile (24,25) verdeutlicht wird. Die Ausströmrichtungen (24,25) sind hierbei jeweils von der Mitte (4) weg nach außen und zu den zugehörigen vorderen Enden (26,27) gerichtet. Die schräge Strömungsrichtung treibt das Wasser von den oben liegenden Fahrzeugflächen, z.B. dem in Figur 3 dargestellten Fahrzeugdach, von der Mitte (4) und dem dortigen Überlappungsbereich (21) nach links und rechts weg zu den Außenseiten des Fahrzeugs (2). Das Wasser kann dadurch leichter und besser abfließen, wobei Flüssigkeitsrückstände weitestgehend vermieden werden. Die konzentrierte austretende Luftströmung im Überlappungsbereich (21) ist hierbei besonders günstig und sorgt für einen starken, nach links und rechts teilenden Treibeffekt für das Wasser auf der Fahrzeugoberfläche. Hierdurch gibt es über die gesamte Länge der Luftauslassöffnung (28) keine Strömungsnester oder andere Fehlstellen im austretenden Trockenluftstrom.

Wie Figur 4 in der Stirnansicht verdeutlicht, kann die untere Kante (29) der Düsenkästen (13,14), die auch die Düsenschlitze (19,20) begrenzt, in der Höhe längs der Achse (30) der Trockendüse (8) fluchten und eine gerade durchgehende Linie bilden. Alternativ ist eine leichte pfeilförmige Abwinkelung des Kantenverlaufs von der erhabenen Mitte (4) bis zu den etwas niedriger liegenden Vorderenden (26,27) möglich.

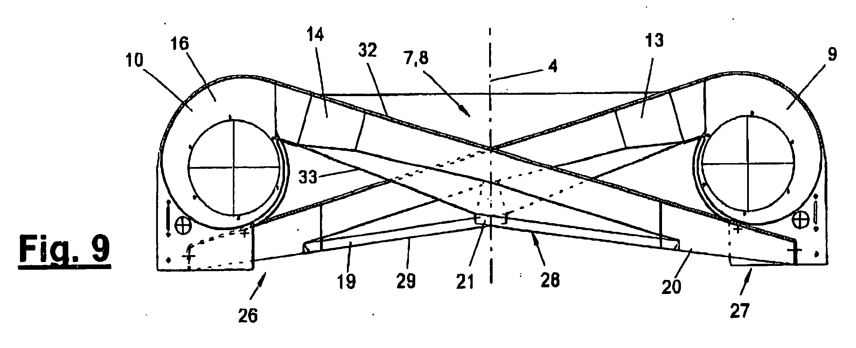

Figur 9 zeigt hierzu eine Variante mit stärker in der Höhe abgewinkelten Düsenschlitzen (19,20) bzw. unteren Gehäusekanten (29). Bei dieser Bauform ergeben sich Strömungskanäle (17,18) mit einer über die Länge weitgehend gleich bleibenden Höhe. Durch die dachförmige Düsenschlitzanordnung ergeben sich außerdem steilere oder ggf. sogar konvergente Ausströmrichtungen.

Abwandlungen der gezeigten Ausführungsform sind in verschiedener Weise möglich. Zum einen kann die gezeigte Trockendüse (8) bei entsprechender Anpassung in der Formgebung auch als Seitendüse Verwendung finden. Ferner ist es möglich, mehr als zwei Düseneinheiten (9,10) vorzusehen. Zudem ist es möglich, den Überlappungsbereich (21) zu vergrößern. Variabel ist ferner die konstruktive Ausgestaltung der Düsenkästen (13,14) und der Gebläse (11,12). Diese können z.B. als Axialgebläse ausgebildet sein. Die Trockendüse (8) kann außerdem ohne die Formanpassungen und Anschmiegungen der Düsenkästen (13,14) auskommen und entsprechend breiter bauen.

### BEZUGSZEICHENLISTE

- 1: Behandlungseinrichtung, Autowaschanlage
- 2: Fahrzeug
- 3: Portal
- 4: Anlagenmitte, Mittellinie
- 5: Fahrtrichtung
- 6: Wascheinrichtung
- 7: Trockeneinrichtung
- 8: Trockendüse, Dachdüse
- 9: Düseneinheit
- 10: Düseneinheit
- 11: Gebläse
- 12: Gebläse
- 13: Düsenkasten 1. Einheit
- 14: Düsenkasten 2. Einheit
- 15: Spiralbereich 1. Einheit
- 16: Spiralbereich 2. Einheit
- 17: Strömungskanal 1. Einheit
- 18: Strömungskanal 2. Einheit
- 19: Düsenschlitz 1. Einheit
- 20: Düsenschlitz 2. Einheit
- 21: Überlappungsbereich
- 22: Luftströmung im Düsenkasten 1. Einheit
- 23: Luftströmung im Düsenkasten 2. Einheit
- 24: Ausströmrichtung 1. Einheit
- 25: Ausströmrichtung 2. Einheit
- 26: vorderes Ende Düsenkasten 1. Einheit
- 27: vorderes Ende Düsenkasten 2. Einheit
- 28: Luftauslassöffnung
- 29: untere Gehäusekante
- 30: Längsachse Trockendüse
- 31: Hubführung
- 32: oberes Leitblech
- 33: unteres Leitblech
- 34: Knickstelle
- 35: Innenwand
- 36: Seitenwand, Außenwand
- 37: Abkantung an Seitenwand
- 38: Abkantung an Düsenschlitz
- 39: Blende

## Patentansprüche

1. Trockeneinrichtung für Behandlungseinrichtungen (1) von Fahrzeugen (2), insbesondere Autowaschanlagen, mit einer Trockendüse (8) und mindestens einem Gebläse (11,12), wobei die Trockendüse (8) mehrteilig ausgebildet ist und mindestens zwei Düsenkästen (13,14) und zwei Gebläse (11,12) aufweist, **dadurch gekennzeichnet, dass** die Düsenkästen (13,14) einander kreuzend angeordnet sind.

2. Trockeneinrichtung nach Anspruch 1, **dadurch gekennzeichnet, dass** die strömungstechnisch getrennten und gegenseitig abgeschotteten Düsenkästen (13,14) quer zur Längsachse (30) der Trockendüse (8) hintereinander angeordnet sind.

3. Trockeneinrichtung nach Anspruch 1 oder 2, **dadurch gekennzeichnet, dass** die Düsenkästen (13,14) jeweils einen vom Gebläse (11,12) aus über die Mitte (4) reichenden Strömungskanal (17,18) mit einem endseitigen Düsenschlitz (19,20) aufweisen.

4. Trockeneinrichtung nach Anspruch 1, 2 oder 3, **dadurch gekennzeichnet, dass** die Düsenkästen (13,14) eine seitlich abgewinkelte Form haben und mit gegenseitiger enger Anschmiegung angeordnet sind, wobei sie mit dem vorderen Ende (26,27) bis neben und/oder unter das Gebläse (12,11) des jeweils anderen Düsenkastens (14,13) reichen und am vorderen Ende (26,27) eine verminderte Kastenbreite aufweisen.

5. Trockeneinrichtung nach einem der vorhergehenden Ansprüche, **dadurch gekennzeichnet, dass** die Düsenkästen (13,14) jeweils einen dem Gebläse (11,12) im wesentlichen jenseits der Mitte (4) gegenüberliegenden Düsenschlitz (19,20) aufweisen.

6. Trockeneinrichtung nach Anspruch 5, **dadurch gekennzeichnet, dass** die Düsenschlitze (19,20) einander im Mittenbereich (4) in enger seitlicher Nachbarschaft überlappen und einen abgewinkelten Längsverlauf aufweisen.

7. Trockeneinrichtung nach Anspruch 5 oder 6, **dadurch gekennzeichnet, dass** die Düsenschlitze (19,20) eine im wesentlichen konstante Breite und eine Länge von etwas mehr als der halben Anlagenbreite aufweisen.

8. Trockeneinrichtung nach Anspruch 5, 6 oder 7, **dadurch gekennzeichnet, dass** die Düsenschlitze (19,20) im Bereich der Mitte (4) eine schräge und gegenseitig parallele Ausrichtung haben und im Bereich des vorderen Endes (26,27) mit Parallellage längs der Achse (30) ausgerichtet sind.

9. Trockeneinrichtung nach einem der Ansprüche 5 bis 8, **dadurch gekennzeichnet, dass** die Düsenschlitze (19,20) gemeinsam eine Luftauslassöffnung (28) mit einem schrägen S-förmigen Verlauf bilden.

10. Trockeneinrichtung nach einem der vorhergehenden Ansprüche, **dadurch gekennzeichnet, dass** die Gebläse (11,12) als Radialgebläse ausgebildet und umfangseitig an den Düsenkasten (13,14) angeschlossen sind, welcher am Gebläse (11,12) einen Spiralbereich (15,16) aufweist.

11. Trockeneinrichtung nach einem der vorhergehenden Ansprüche, **dadurch gekennzeichnet, dass** die Trockendüse (8) als im wesentlichen horizontale Dachdüse ausgebildet ist.

12. Behandlungseinrichtung (1) von Fahrzeugen (2), insbesondere Autowaschanlage, mit einer Trockeneinrichtung (7),die mindestens eine Trockendüse (8) und mindestens ein Gebläse (11,12) aufweist, **dadurch gekennzeichnet, dass** die Trockendüse (8) nach den Merkmalen von einem der Ansprüche 1 bis 11 ausgebildet ist.

13. Verfahren zum Trocknen von Fahrzeugen (2) in einer Behandlungseinrichtung (1), insbesondere einer Autowaschanlage, mit einer Trockendüse (8) und mindestens einem Gebläse (11,12), **dadurch gekennzeichnet, dass** bei der mehrteilig mit mindestens zwei einander kreuzenden Düsenkästen (13,14) und zwei Gebläsen (11,12) ausgebildeten Trockendüse (8) die Luft jeweils am Rand der Trockendüse (8) angesaugt und in einem geschlossenen Strömungskanal (17,18) über die Mitte (4) hinweg bis zu einem Düsenschlitz (19,20) auf der anderen Seite geblasen und dort auf das Fahrzeug (2) gerichtet wird.

## Claims

1. Drying apparatus for treating devices (1) of vehicles (2), in particular car wash systems, with a drying nozzle (8) and at least one blower (11, 12), the drying nozzle (8) being of multi-part design and having at least two nozzle boxes (13, 14) and two blowers (11, 12), **characterized in that** the nozzle boxes (13, 14) are arranged in a manner such that they intersect each other.

2. Drying apparatus according to Claim 1, **characterized in that** the nozzle boxes (13, 14) which are separated in terms of flow and are partitioned off from each other are arranged consecutively transversely with respect to the longitudinal axis (30) of the drying nozzle (8).

3. Drying apparatus according to Claim 1 or 2, **characterized in that** the nozzle boxes (13, 14) each have a flow duct (17, 18) which reaches over the centre (4) from the blower (11, 12) and has a nozzle slot (19, 20) on the end side.

4. Drying apparatus according to Claim 1, 2 or 3, **characterized in that** the nozzle boxes (13, 14) have a laterally angled shape and are arranged nesting closely to each other, with them reaching at the front end (26, 27) to a point next to and/or under the blower (12, 11) of the other nozzle box (14, 13) in each case and having a reduced box width at the front end (26, 27).

5. Drying apparatus according to one of the preceding claims, **characterized in that** the nozzle boxes (13, 14) each have a nozzle slot (19, 20) lying essentially on the other side of the centre (4) opposite the blower (11, 12).

6. Drying apparatus according to Claim 5, **characterized in that** the nozzle slots (19, 20) overlap each other in the centre region (4) in a close lateral proximity and have an angled longitudinal profile.

7. Drying apparatus according to Claim 5 or 6, **characterized in that** the nozzle slots (19, 20) have an essentially constant width and a length of somewhat more than half the width of the system.

8. Drying apparatus according to Claim 5, 6 or 7, **characterized in that** the nozzle slots (19, 20) have an oblique and mutually parallel alignment in the region of the centre (4) and, in the region of the front end (26, 27), are aligned with a parallel position along the axis (30).

9. Drying apparatus according to one of Claims 5 to 8, **characterized in that** the nozzle slots (19, 20) together form an air outlet opening (28) with an oblique S-shaped profile.

10. Drying apparatus according to one of the preceding claims, **characterized in that** the blowers (11, 12) are designed as radial blowers and are connected on the periphery to the nozzle box (13, 14) which has a spiral region (15, 16) on the blower (11, 12).

11. Drying apparatus according to one of the preceding claims, **characterized in that** the drying nozzle (8) is designed as an essentially horizontal roof nozzle.

12. Treating device (1) of vehicles (2), in particular car wash system, with a drying apparatus (7) which has at least one drying nozzle (8) and at least one blower (11, 12), **characterized in that** the drying nozzle (8) is designed in accordance with the features of one of Claims 1 to 11.

13. Method for drying vehicles (2) in a treating device (1), in particular a car wash system, with a drying nozzle (8) and at least one blower (11, 12), **characterized in that**, in the case of the drying nozzle (8) which is of multi-part design with at least two mutually intersecting nozzle boxes (13, 14) and two blowers (11, 12), the air is sucked up in each case at the edge of the drying nozzle (8) and blown in a closed flow duct (17, 18) beyond the centre (4) to a nozzle slot (19, 20) on the other side where it is directed at the vehicle (2).

## Revendications

1. Dispositif de séchage pour des dispositifs (1) de traitement de véhicules (2) automobiles, notamment d'installations de lavage d'automobiles, comprenant une buse (8) de séchage et au moins une soufflante (11, 12), la buse 8 de séchage étant en plusieurs parties et ayant au moins deux caissons (13, 14) de buse et deux soufflantes (11, 12), **caractérisé en ce que** les caissons (13, 14) de buse sont entrecroisés l'un avec l'autre.

2. Dispositif de séchage suivant la revendication 1, **caractérisé en ce que** les caissons (13, 14) de buse, séparés fluidiquement et cloisonnés mutuellement, sont disposés l'un derrière l'autre transversalement à l'axe (30) longitudinal de la buse (8) de séchage.

3. Dispositif de séchage suivant la revendication 1 ou 2, **caractérisé en ce que** les caissons (13, 14) de buse ont respectivement un canal (17, 18) d'écoulement allant de la soufflante (11, 12) au-delà du milieu (4) et ayant une fente (19, 20) de buse du côté de l'extrémité.

4. Dispositif de séchage suivant la revendication 1, 2 ou 3, **caractérisé en ce que** les caissons (13, 14) de buse ont une forme coudée latéralement et sont disposés en s'adaptant étroitement mutuellement en allant par l'extrémité (26, 27) avant jusqu'à côté et/ou en dessous de la soufflante (12, 11) de l'autre caisson (14, 13) de buse respectif et en ayant à l'extrémité (26, 27) avant une largeur de caisson diminuée.

5. Dispositif de séchage suivant l'une des revendications précédentes, **caractérisé en ce que** les caissons (13, 14) de buse ont respectivement une fente (19, 20) de buse opposée à la soufflante (11, 12), sensiblement de l'autre côté du milieu (4).

6. Dispositif de séchage suivant la revendication 5, **caractérisé en ce que** les fentes (19, 20) de buse se chevauchent l'une l'autre dans la partie (4) du milieu en étant à proximité latérale étroite et ont un tracé longitudinal coudé.

7. Dispositif de séchage suivant la revendication 5 ou 6, **caractérisé en ce que** les fentes (19, 20) de buse ont une largeur sensiblement constante et une longueur un peu plus que la demi largeur de l'installation.

8. Dispositif de séchage suivant la revendication 5, 6 ou 7, **caractérisé en ce que** les fentes (19, 20) de buse ont, dans la partie du milieu (4), une direction inclinée et parallèle mutuellement et sont dirigées, dans la partie d'extrémité (26, 27) avant, en ayant une position parallèle le long de l'axe (30).

9. Dispositif de séchage suivant l'une des revendications 5 à 8, **caractérisé en ce que** les fentes (19, 20) de buse forment conjointement une ouverture (28) de sortie d'air, ayant un tracé incliné en forme de S.

10. Dispositif de séchage suivant l'une des revendications précédentes, **caractérisé en ce que** les soufflantes (11, 12) sont constituées en soufflantes radiales et sont raccordées côté périphérique au caisson (13, 14) de buse qui a sur la soufflante (11, 12) une partie (15, 16) en spirale.

11. Dispositif de séchage suivant l'une des revendications précédentes, **caractérisé en ce que** la buse (8) de séchage est constituée en buse de toit sensiblement horizontal.

12. Dispositif (1) de traitement de véhicules (2) automobiles, notamment installation de lavage d'automobiles, comprenant un dispositif (7) de séchage, qui a au moins une buse (8) de séchage et au moins une soufflante (11, 12), **caractérisé en ce que** la buse (8) de séchage est constituée suivant les caractéristiques de l'une des revendications 1 à 11.

13. Procédé de séchage de véhicules (2) automobiles dans un dispositif (1) de traitement, notamment dans une installation de lavage d'automobiles, comprenant une buse (8) de séchage et au moins une soufflante (11, 12), **caractérisé en ce qu'**alors que la buse (8) de séchage est constituée en plusieurs parties en ayant au moins deux caissons (13, 14) de buse qui s'entrecroisent l'un l'autre et deux soufflantes (11, 12), on aspire l'air respectivement au bord de la buse (8) de séchage et on l'insuffle dans un canal (17, 18) d'écoulement fermé, au-delà du milieu (4) jusqu'à une fente (19, 20) de buse de l'autre côté et de là on l'envoie sur le véhicule (2) automobile.
